# EUROPEAN PATENT APPLICATION

(11) **EP 3 770 469 A1**
(43) Date of publication of application: **27.01.2021**
(21) Application number: 19771000.7
(22) Date of filing: 20.03.2019
(51) Int. Cl.: F16J 15/3204, F16F 9/36, F16J 15/18, F15B 15/14

(54) **RING-SHAPED DUST SEAL**

(30) Priority: 21.03.2018 JP 2018053693
(71) Applicant: NOK Corporation, Minato-ku Tokyo 105-8585 (JP)
(72) Inventor: TOKUNAGA Wataru, Kitaibaraki-shi, Ibaraki 3191535 (JP)
(74) Representative: Global IP Europe Patentanwaltskanzlei
(86) International application number: PCT/JP2019/011797
(87) International publication number: WO 2019/182034

(57) **Abstract**

Provided is an annular dust seal having an excellent dust seal function and improved in local wear, settling (deformation), and stick slip (squealing, vibration).

The annular dust seal includes a circular annular dust lip (4), the annular dust seal being formed of an elastic material, being supported by a housing, and bringing a surface of the dust lip (4) into contact with an outer peripheral surface of a reciprocating shaft that is disposed in the housing and includes a tip end side protruding toward an atmosphere side. In a longitudinal section of the dust lip (4), an average radius of curvature of a surface (4b) having a convex curvature on an inner side of the housing from a top portion of the dust lip (4) is larger than an average radius of curvature of a surface (4a) having a convex curvature on the atmosphere side from the top portion of the dust lip (4).

## Description

### Technical Field

The present invention relates to an annular dust seal, and particularly relates to an annular dust seal having an excellent dust seal function but not causing local wear, settling (deformation), and stick slip (squealing, vibration).

### Background Art

Conventionally, as a dust seal used for a rod seal portion in a hydraulic cylinder or a suspension of a construction machinery, a shock absorber of an automobile, and the like, there is an annular dust seal 300 that is slidably in sealing contact with an outer peripheral surface of a reciprocating shaft (rod) 200 as shown in Fig. 8 (Patent Literature 1).

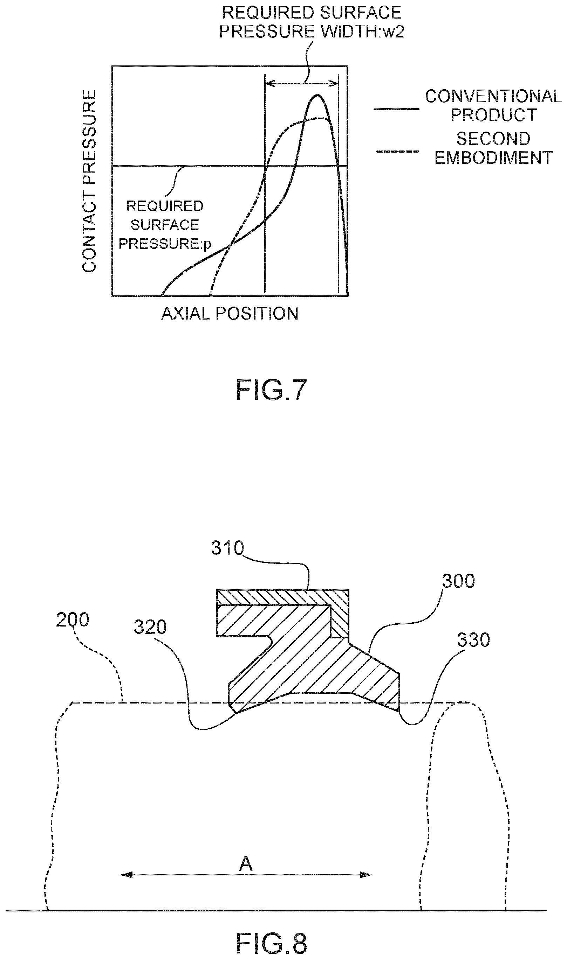

The reciprocating shaft 200 is disposed in a housing (not shown), and is capable of reciprocating in an axial direction as indicated by an arrow A in Fig. 8. The reciprocating shaft 200 includes a base end side (a left side in Fig. 8) located in the housing and a tip end side (a right side in Fig. 8) protruding toward an outside in an axial direction from an opening end portion of the housing (hereinafter, referred to as "atmosphere side"). Although the housing is filled with oil, the hydraulic cylinder and the like are provided with both of a lip packing to prevent external oil leakage and a buffering for the purpose of hydraulic buffering and high-temperature oil cut at the time of high load on an inner side (hereinafter, referred to as "hydraulic side") of the housing of the dust seal in many cases, and the dust seal is supplied with an oil film that has passed between the lip packing and the shaft.

The annular dust seal 300 is integrally formed in a circular annular shape from a rubber-like elastic material, and is attached with a metal ring 310 on an outer peripheral side. The annular dust seal 300 is disposed in an annular groove formed in the housing. The annular groove is formed to surround an outer peripheral surface of the reciprocating shaft 200.

The annular dust seal 300 includes an oil lip 320, which closely contacts with a peripheral surface of the reciprocating shaft 200, on the hydraulic side. In addition, the annular dust seal 300 includes a circular annular dust lip 330, which closely contacts with the peripheral surface of the reciprocating shaft 200, on the atmosphere side.

The annular dust seal 300 brings the oil lip 320 into pressure-contact with the outer peripheral surface of the reciprocating shaft 200 with an elastic force of the rubber-like elastic material. In addition, the annular dust seal 300 brings the dust lip 330 into pressure-contact with the outer peripheral surface of the reciprocating shaft 200 with the elastic force of the rubber-like elastic material. When the oil lip 320 and the dust lip 330 are brought into pressure-contact with the outer peripheral surface of the reciprocating shaft 200, the inside of the housing is sealed.

The annular dust seal 300 seals oil in the housing with the oil lip 320. In addition, the annular dust seal 300 prevents earth and sand from entering the housing with the dust lip 330. The annular dust seal 300 contributes to a longer service life of a device by maintaining a good lubrication state of a hydraulic holding component located closer to a hydraulic side than the dust lip 330 or a sliding component such as a bearing or a gear for a long period of time. The dust lip 330 is configured to form an appropriate oil film on the outer peripheral surface of the reciprocating shaft 200.

### Document List

### Patent Literature

Patent Literature 1: Japanese Patent Application Publication No. 2014-214769

### Summary of Invention

### Technical Problem

The annular dust seal 300 is formed of an elastic material, for example, various rubbers, urethane, or PTFE capable of sealing a gap with the outer peripheral surface of the reciprocating shaft 200 in order to prevent external foreign substances from entering the housing by the dust lip 330. In addition, since it is necessary to scrape off external foreign substances adhering to the outer peripheral surface of the reciprocating shaft 200, the annular dust seal 300 is required to have a rigidity and is formed of a high-hardness synthetic resin material such as rubber or urethane.

Further, the annular dust seal 300 increases a seal contact pressure against the outer peripheral surface of the reciprocating shaft 200 to enhance seal properties against external foreign substances adhering to the outer peripheral surface of the reciprocating shaft 200, and thus can contribute to a longer service life of a device.

However, since a surface pressure gradient is increased when the annular dust seal 300 increases the seal contact pressure against the outer peripheral surface of the reciprocating shaft 200, an oil film passing through the dust lip may become thin and scraping leakage may increase when the shaft strokes toward the inner side of the housing. In addition, when the annular dust seal 300 is increased in a tightening force in order to increase the seal contact pressure, local wear, settling (deformation), stick slip (squealing, vibration), and the like may occur.

It is a problem of the present invention to provide an annular dust seal having an excellent dust seal function and improved in local wear, settling (deformation), and stick slip (squealing, vibration).

Other problems of the present invention will become apparent from the following description.

### Solution to Problem

The above-described problems are solved by the following respective inventions.
1. An annular dust seal including:
   a circular annular dust lip, the annular dust seal being formed of an elastic material, supported by a housing, and bringing a surface of the dust lip into contact with an outer peripheral surface of a reciprocating shaft that is disposed in the housing and includes a tip end side protruding toward an atmosphere side, characterized in that
   in a longitudinal section of the dust lip, an average radius of curvature of a surface having a convex curvature on an inner side of the housing from a top portion of the dust lip is larger than an average radius of curvature of a surface having a convex curvature on the atmosphere side from the top portion of the dust lip.
2. The annular dust seal according to 1 described above, characterized in that the average radius of curvature of the surface having the convex curvature on the inner side of the housing from the top portion of the dust lip is 1.5 to 4 times the average radius of curvature of the surface having the convex curvature on the atmosphere side from the top portion of the dust lip.
3. The annular dust seal according to 1 or 2 described above, characterized in that the average radius of curvature of the surface having the convex curvature on the inner side of the housing from the top portion of the dust lip is 2 to 3 times the average radius of curvature of the surface having the convex curvature on the atmosphere side from the top portion of the dust lip.
4. The annular dust seal according to 1, 2, or 3 described above, characterized in that, when the surface of the dust lip is brought into contact with the outer peripheral surface of the reciprocating shaft,
   an end surface facing the atmosphere side forms an angle of 90° or more with respect to a generatrix of the outer peripheral surface at least in a vicinity of the outer peripheral surface of the reciprocating shaft.
5. The annular dust seal according to any one of 1 to 4 described above, characterized in that, when the surface of the dust lip is brought into contact with the outer peripheral surface of the reciprocating shaft,
   an end surface facing the atmosphere side has a tapered shape protruding toward the atmosphere side as the end surface is closer to the outer peripheral surface of the reciprocating shaft.

### Effects of Invention

According to the present invention, it is possible to provide an annular dust seal having an excellent dust seal function and improved in local wear, settling (deformation), and stick slip (squealing, vibration).

### Brief Description of Drawings

[Fig. 1] A longitudinal sectional view showing a first embodiment (mounted state) of an annular dust seal of the present embodiment.
[Fig. 2] A longitudinal sectional view showing the annular dust seal (unmounted state) shown in Fig. 1.
[Fig. 3] An enlarged longitudinal sectional view showing a main portion of the annular dust seal shown in Fig. 1.
[Fig. 4] A graph showing a contact pressure of the annular dust seal shown in Fig. 1 with respect to the reciprocating shaft.
[Fig. 5] A longitudinal sectional view showing a second embodiment (unmounted state) of the annular dust seal of the present invention.
[Fig. 6] An enlarged longitudinal sectional view showing a main portion of the annular dust seal shown in Fig. 5.
[Fig. 7] A graph showing a contact pressure of the annular dust seal shown in Fig. 5 with respect to the reciprocating shaft.
[Fig. 8] A longitudinal sectional view showing a conventional annular dust seal.

### Description of Embodiments

Hereinafter, embodiments for carrying out the present invention will be described.

### [First Embodiment]

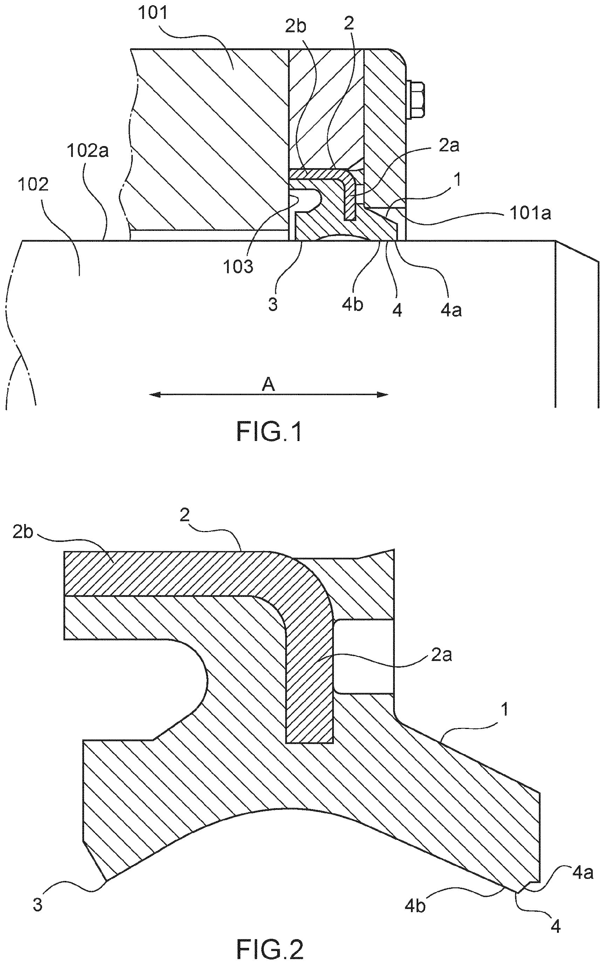

Fig. 1 is a longitudinal sectional view showing a first embodiment (mounted state) of an annular dust seal of the present embodiment.

The first embodiment of the annular dust seal 1 is used for a rod seal in a hydraulic cylinder or a suspension of a construction machinery, a shock absorber of an automobile, or the like. The present embodiment is an example of application to a rod sealing system employed in a hydraulic cylinder (not shown) to be used as an actuator of a construction machinery, a civil engineering machinery, a transport vehicle, or the like.

As shown in Fig. 1, a rod sealing system is provided between a piston rod 102 as a movable portion that reciprocates linearly and a cylinder housing 101 as a fixed portion that houses the piston rod 102. The rod sealing system is supported by the housing 101. The housing 101 has an opening portion 101a on an atmosphere side (a right side in Fig. 1), and is in a lid-closed state on a hydraulic side (a left side and an inner side in Fig. 1) (not shown).

A reciprocating shaft (rod) 102 is disposed in the housing 101. One tip end side of the reciprocating shaft 102 is located on the hydraulic side inside the housing 101, and the other tip end side thereof protrudes from the opening portion 101a of the housing 101. The reciprocating shaft 102 can reciprocate in an axial direction as indicated by an arrow A in Fig. 1. A reciprocating speed in the axial direction of the reciprocating shaft 102 is regulated by fluid in the housing 101.

The rod sealing system includes a rod packing (not shown), a buffering (not shown) disposed on the hydraulic side of the rod packing, and a dust seal 1 disposed on the atmosphere side of the rod packing. Accordingly, the buffering, the rod packing, and the dust seal 1 are arranged in this order from the hydraulic side to the atmosphere side.

The rod packing serves as a main seal for preventing leakage of hydraulic oil to the outside, and has a structure in which a circular annular U-packing is mainly used and a flat washer-shaped backup ring is adjacent to the U-packing. Both the U-packing and the backup ring are housed in a mounting groove provided on an inner peripheral surface of the cylinder housing 101.

The buffering plays a role of maintaining durability of the rod packing by buffering shock pressure and fluctuation pressure at the time of high load and preventing high-temperature hydraulic oil from flowing into a side of the rod packing. Such a buffering has a structure in which a circular annular U-packing is mainly used and a backup ring is fitted into a heel portion of the U-packing. Both the U-packing and the backup ring are housed in the mounting groove provided on an inner peripheral surface of the cylinder housing 101.

Fig. 2 is a longitudinal sectional view showing the annular dust seal (unmounted state) shown in Fig. 1.

As shown in Fig. 2, the annular dust seal 1 is integrally formed of an elastic material into a circular annular shape. As a material forming the annular dust seal 1, a synthetic resin material such as various rubbers, urethane, or PTFE is preferable as an elastic material capable of sealing a gap with an outer peripheral surface 102a of the reciprocating shaft 102.

The annular dust seal 1 is provided with a metal ring 2 on the outer peripheral side. The metal ring 2 includes a circular annular plate portion 2a and a circular tubular portion 2b formed by bending an outer peripheral part of the circular annular plate portion 2a. The metal ring 2 is attached to the annular dust seal 1 in such a manner that the circular tubular portion 2b is arranged along the outer peripheral surface of the annular dust seal 1 and the circular annular plate portion 2a is buried in the annular dust seal 1.

The annular dust seal 1 is disposed in an annular groove 103 formed in the housing 101 as shown in Fig. 1. The annular groove 103 is located near the opening portion 101a of the housing 101, surrounds the outer peripheral surface 102a of the reciprocating shaft 102, and is formed coaxially with the reciprocating shaft 102.

As shown in Figs. 1 and 2, the annular dust seal 1 includes a circular annular oil lip 3, which contacts with the outer peripheral surface of the reciprocating shaft 102, on the hydraulic side (inner side). In addition, the annular dust seal 1 includes a circular annular dust lip 4, which contacts with the outer peripheral surface of the reciprocating shaft 102, on the atmosphere side.

The annular dust seal 1 brings a surface of the oil lip 3 into pressure-contact with the outer peripheral surface 102a of the reciprocating shaft 102 with an elastic force of the elastic material. Further, the annular dust seal 1 brings a surface of the dust lip 4 into pressure-contact with the outer peripheral surface 102a of the reciprocating shaft 102 with the elastic force of the elastic material. When the oil lip 3 and the dust lip 4 are brought into pressure-contact with the outer peripheral surface 102a of the reciprocating shaft 102, the inside of the housing 101 is sealed.

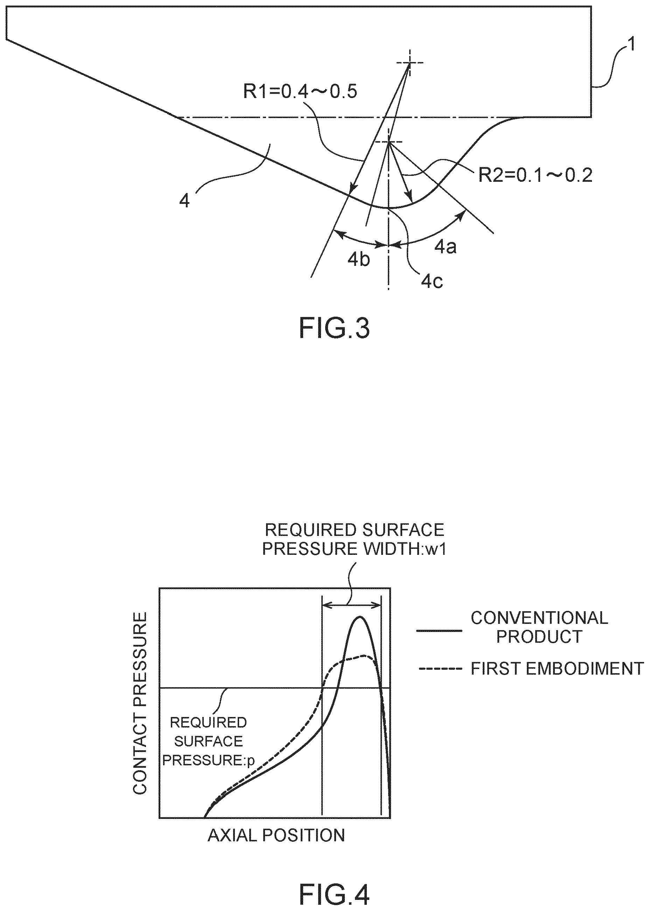

Fig. 3 is an enlarged longitudinal sectional view showing a main portion of the annular dust seal shown in Fig. 1.

The surface of the dust lip 4 is formed in a torus shape, and has a circular arc shape in longitudinal section as shown in Fig. 3. In the longitudinal section of the dust lip 4, an average radius of curvature (≈ (R1+R2)/2) of a surface 4b having a convex curvature on the hydraulic side from a top portion 4c of the dust lip 4 becomes larger than an average radius of curvature (= R2) of a surface 4a having a convex curvature on the atmosphere side from the top portion 4c of the dust lip 4.

In the longitudinal section of the dust lip 4, the average radius of curvature (≈ (R1+R2)/2) of the surface 4b having the convex curvature on the hydraulic side from the top portion 4c of the dust lip 4 is preferably 1.5 to 4 times the average radius of curvature (R2) of the surface 4a having the convex curvature on the atmosphere side from the top portion 4c of the dust lip 4.

In the longitudinal section of the dust lip 4, the average radius of curvature (≈ (R1+R2)/2) of the surface 4b having the convex curvature on the hydraulic side from the top portion 4c of the dust lip 4 is more preferably 2 to 3 times the average radius of curvature (R2) of the surface 4a having the convex curvature on the atmosphere side from the top portion 4c of the dust lip 4.

As in the embodiment, in general materials, temperature conditions, and types of dust when used for the rod seal in the hydraulic cylinder or suspension of the construction machinery and the shock absorber of the automobile, the radius of curvature R1 on the hydraulic side is preferably about 0.4 mm to 0.5 mm, and the radius of curvature R2 on the atmosphere side is preferably about 0.15 mm to 0.2 mm. However, optimum values of these specific numerical values vary depending on the materials forming the annular dust seal 1, the temperature conditions, the types of dust, and the like.

Fig. 4 is a graph showing a contact pressure of the annular dust seal shown in Fig. 1 with respect to the reciprocating shaft.

In Fig. 4, a region where the contact pressure is positive is a region where the dust lip 4 is crushed due to elastic deformation and contacts with the outer peripheral surface 102a of the reciprocating shaft 102. The atmosphere side of the contact region is a right end of a horizontal axis, and a left side of the horizontal axis indicates a distance to the hydraulic side.

In a conventional product in Fig. 4, a position having a maximum contact pressure is the top portion of the dust lip. In the annular dust seal 1 of the present embodiment, a position of the top portion 4c is the same as that of the conventional product, but the contact pressure may not be maximum at the top portion 4c due to the difference in the radius of curvature of the surface of the dust lip 4.

As shown in Fig. 4, the contact pressure of the dust lip 4 with respect to the outer peripheral surface 102a of the reciprocating shaft 102 has a lower peak value than that of the above-described conventional product, and a length in the axial direction of the portion having the peak value is longer on the hydraulic side. A required surface pressure width w1 in which the contact pressure exceeds a required surface pressure p is wider than that of the conventional product. This is because the radius of curvature R1 on the hydraulic side is increased. The conventional product and the annular dust seal 1 of the present embodiment shown in Fig. 4 have the same material, overall shape, temperature conditions, and the like.

Since the contact pressure of the dust lip 4 with respect to the outer peripheral surface 102a of the reciprocating shaft 102 is reduced due to a large radius of curvature R1 on the hydraulic side, local wear, settling (deformation) and stick slip (squealing, vibration) are prevented, and scraping leakage of a liquid (oil) is prevented. Further, a liquid film (for example, an oil film) adhering to the outer peripheral surface 102a of the reciprocating shaft 102 has an appropriate thickness. Since the contact pressure of the dust lip 4 is sufficiently applied to the outer peripheral surface 102a of the reciprocating shaft 102 due to a small radius of curvature R2 on the atmosphere side, an excellent dust seal function is realized.

In other words, the annular dust seal 1 has an excellent dust seal function of preventing external foreign substances (such as earth and sand, ore, oil, water, ice, and sap) from entering the housing 101, and brings hydraulic holding components located closer to the hydraulic side than the annular dust seal 1 and sliding components such as bearings and gears into a good lubricating state. The annular dust seal 1 can maintain the excellent dust seal function for a long period of time, and can contribute to a longer service life of a device.

### [Second Embodiment]

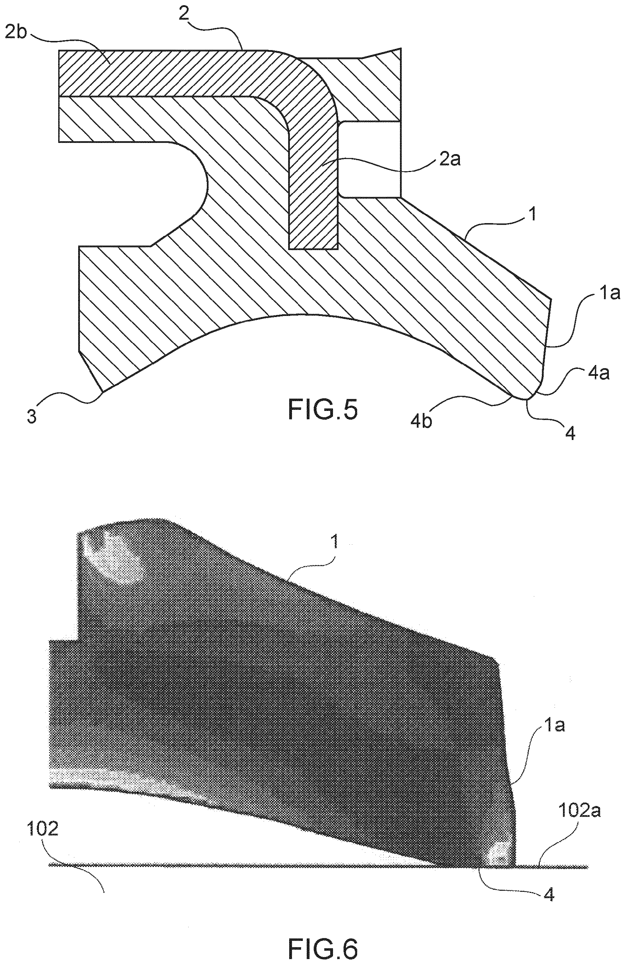

Fig. 5 is a longitudinal sectional view showing a second embodiment (unmounted state) of the annular dust seal of the present invention, and Fig. 6 is an enlarged longitudinal sectional view of a main portion of the annular dust seal shown in Fig. 5. In Figs. 5 and 6, the portions having the same reference numerals as those in Figs. 1 to 3 are the portions having the same configuration, the description of such portions will not be presented with reference to the description of the above-described embodiment.

As shown in Figs. 5 and 6, in the annular dust seal 1, it is preferable that an atmosphere-side end surface 1a facing the atmosphere side has a tapered shape protruding toward the atmosphere side as the end surface 1a is closer to the outer peripheral surface 102a of the reciprocating shaft 102 in a mounted state.

As described above, since the shape of the atmosphere-side end surface 1a has the tapered shape protruding toward the atmosphere side as the end surface 1a is closer to the outer peripheral surface 102a of the reciprocating shaft 102, foreign substances adhering to the outer peripheral surface 102a can be satisfactorily scraped off with the atmosphere-side end surface 1a.

Further, the atmosphere-side end surface 1a of the annular dust seal 1 does not need to be a conical surface (a longitudinal section is a straight line), and may form an angle of 90° or more in the mounted state with respect to a generatrix of the outer peripheral surface 102a at least in the vicinity of the outer peripheral surface 102a of the reciprocating shaft 102.

Since the atmosphere-side end surface 1a forms an angle of 90° or more with respect to the generatrix of the outer peripheral surface 102a in the vicinity of the outer peripheral surface 102a, the annular dust seal 1 can satisfactorily scrape off the foreign substances adhering to the outer peripheral surface 102a. When the atmosphere-side end surface 1a forms an angle of less than 90° with respect to the generatrix of the outer peripheral surface 102a in the vicinity of the outer peripheral surface 102a, the foreign substances adhering to the outer peripheral surface 102a may enter the space between the reciprocating shaft 102 and the annular dust seal 1 without being satisfactorily scraped off with a reciprocating motion of the reciprocating shaft 102.

When the annular dust seal 1 is in a state of not being mounted around the reciprocating shaft 102 as shown in Fig. 5, the atmosphere-side end surface 1a forms an angle of less than 90° with respect to the generatrix of the outer peripheral surface 102a of the reciprocating shaft 102 to be mounted, and may have a tapered shape protruding toward the atmosphere side as being away from the outer peripheral surface 102a. In other words, when being mounted around the reciprocating shaft 102 as shown in Fig. 6, the annular dust seal 1 is displaced by being pressed against the outer peripheral surface 102a of the reciprocating shaft 102, and the atmosphere-side end surface 1a forms an angle of 90° or more with respect to the generatrix of the outer peripheral surface 102a of the reciprocating shaft 102 and has a tapered shape protruding toward the atmosphere side as the end surface 1a is closer to the outer peripheral surface 102a. The amount of the annular dust seal 1 to be displaced becomes a tightening margin.

Fig. 7 is a graph showing a contact pressure of the annular dust seal shown in Fig. 5 with respect to the reciprocating shaft.

In Fig. 7, a region where the contact pressure is positive is a region where the dust lip 4 is crushed due to elastic deformation and contacts with the outer peripheral surface 102a of the reciprocating shaft 102. The atmosphere side of the contact region is a right end of a horizontal axis, and a left side of the horizontal axis indicates a distance to the hydraulic side.

In a conventional product in Fig. 7, a position having a maximum contact pressure is the top portion of the dust lip. In the annular dust seal 1 of the present embodiment, a position of the top portion 4c is the same as that of the conventional product, but the contact pressure may not be maximum at the top portion 4c due to the difference in the radius of curvature of the surface of the dust lip 4.

Even in this embodiment, as shown in Fig. 7, the contact pressure of the dust lip 4 with respect to the outer peripheral surface 102a of the reciprocating shaft 102 has a lower peak value than that of the above-described conventional product, and a length in the axial direction of the portion having the peak value is longer on the hydraulic side. A required surface pressure width w2 in which the contact pressure exceeds a required surface pressure p is wider than that of the conventional product. This is because the radius of curvature R1 on the hydraulic side is increased. The conventional product and the annular dust seal 1 of the present embodiment shown in Fig. 7 have the same material, overall shape, temperature conditions, and the like.

Accordingly, the annular dust seal 1 has an excellent dust seal function, can maintain the excellent dust seal function for a long period of time, and can contribute to a longer service life of a device. Further, the annular dust seal 1 of the present embodiment can satisfactorily scrape off foreign substances adhering to the outer peripheral surface 102a of the reciprocating shaft 102 with the atmosphere-side end surface 1a.

Specific configuration, shapes, materials, operations, numerical values, etc. in the description of the above-described embodiments are merely examples for describing the present invention, and is not intended to restrictively interpret the present invention.

The annular dust seal described above is used in the rod sealing system of the hydraulic cylinder to be used as an actuator of the construction machinery, the civil engineering machinery, the transport vehicle, or the like. However, the annular dust seal is not limited to the rod sealing system of the hydraulic cylinder, and is applicable to any devices that needs to seal the inside of the housing around the shaft from the atmosphere.

### List of Reference Signs

- 1: annular dust seal
- 1a: atmosphere-side end surface
- 2: metal ring
- 3: oil lip
- 4: dust lip
- 4a: surface with convex curvature on atmosphere side from top portion of dust lip
- 4b: surface with convex curvature on hydraulic side from top portion of dust lip
- R1: radius of curvature on hydraulic side
- R2: radius of curvature on atmosphere side
- 101: housing
- 101a: opening portion
- 102: reciprocating shaft (rod)
- 102a: outer peripheral surface
- 103: annular groove

## Claims

1. An annular dust seal comprising:
a circular annular dust lip, the annular dust seal being formed of an elastic material, supported by a housing, and bringing a surface of the dust lip into contact with an outer peripheral surface of a reciprocating shaft that is disposed in the housing and includes a tip end side protruding toward an atmosphere side, **characterized in that**
in a longitudinal section of the dust lip, an average radius of curvature of a surface having a convex curvature on an inner side of the housing from a top portion of the dust lip is larger than an average radius of curvature of a surface having a convex curvature on the atmosphere side from the top portion of the dust lip.

2. The annular dust seal according to claim 1, **characterized in that** the average radius of curvature of the surface having the convex curvature on the inner side of the housing from the top portion of the dust lip is 1.5 to 4 times the average radius of curvature of the surface having the convex curvature on the atmosphere side from the top portion of the dust lip.

3. The annular dust seal according to claim 1 or 2, **characterized in that** the average radius of curvature of the surface having the convex curvature on the inner side of the housing from the top portion of the dust lip is 2 to 3 times the average radius of curvature of the surface having the convex curvature on the atmosphere side from the top portion of the dust lip.

4. The annular dust seal according to claim 1, 2, or 3, **characterized in that**, when the surface of the dust lip is brought into contact with the outer peripheral surface of the reciprocating shaft,
an end surface facing the atmosphere side forms an angle of 90° or more with respect to a generatrix of the outer peripheral surface at least in a vicinity of the outer peripheral surface of the reciprocating shaft.

5. The annular dust seal according to any one of claims 1 to 4, **characterized in that**, when the surface of the dust lip is brought into contact with the outer peripheral surface of the reciprocating shaft,
an end surface facing the atmosphere side has a tapered shape protruding toward the atmosphere side as the end surface is closer to the outer peripheral surface of the reciprocating shaft.
